# DEMANDE DE BREVET EUROPEEN

(11) **EP 1 849 900 A1**
(43) Date de publication de la demande: **31.10.2007**
(21) Numéro de dépôt: 07290520.1
(22) Date de dépôt: 25.04.2007
(51) Int. Cl.: D04B 21/00, D04B 21/20, B29C 45/14

(54) **Revêtement textile d'une pièce notammnet en matière plastique**

(30) Priorité: 26.04.2006 FR 0603719
(71) Demandeur: MÖLLERTECH SAS, 91370 Verrières le Buisson (FR)
(72) Inventeur: Boisson, Rémy, 59540 Caudry (FR); Richard, Murielle, 36230 Buxieres d'Aillac (FR)
(74) Mandataire: Thinat, Michel

(57) **Abrégé**

L'invention concerne un revêtement textile (1), susceptible d'être appliqué à la surface extérieure d'une pièce (2) en matière plastique lors de la réalisation par moulage de cette pièce (2).

Ce revêtement (1) comprend des moyens de barrière le rendant imperméable à la matière plastique lors du moulage. Le revêtement est caractérisé en ce que ces moyens de barrière sont formés par des éléments intrinsèques au textile.

L'invention est utilisable dans le domaine des véhicules automobiles.

## Description

L'invention concerne un revêtement textile, susceptible d'être appliqué à la surface extérieure d'une pièce en matière plastique, notamment dans le domaine des véhicules automobiles, dans un moule par injection de la matière plastique, pour la réalisation de la pièce, ce revêtement comprenant des moyens de barrière le rendant imperméable à la matière plastique lors du moulage.

Des revêtements de ce type sont déjà connus et notamment utilisés dans l'industrie automobile pour recouvrir certaines pièces plastiques et leur donner un aspect plus noble. Ces revêtements comportent une couche de textile extérieure, plus particulièrement de tricot, destinée à conférer à la pièce l'aspect esthétique et un non-tissé, destiné à empêcher le matériau support de passer, lors du moulage, à travers le textile et altérer l'aspect esthétique.

Les revêtements connus présentent ainsi l'inconvénient qu'il faut associer au textile un non-tissé spécifique adapté pour assurer la fonction d'une barrière.

L'invention a pour but de pallier cet inconvénient.

Pour atteindre ce but, le revêtement selon l'invention est caractérisé en ce que les moyens de barrière destinés à rendre le revêtement imperméable à la matière plastique sont formés par des moyens intrinsèques au textile.

Selon une caractéristique de l'invention, le revêtement est caractérisé en ce que les moyens de barrière sont formés par des brides du textile couvrant les interstices du textile.

Selon une autre caractéristique de l'invention, le revêtement est caractérisé en ce que le nombre de brides couvrant un interstice est augmenté par augmentation du déplacement de ces brides.

Selon encore une autre caractéristique de l'invention, le revêtement est caractérisé en ce que les brides ou les mailles sont traitées mécaniquement par des moyens tels que du grattage ou émérisage.

Selon encore une autre caractéristique de l'invention, le revêtement est caractérisé en ce que le textile comporte une pluralité de barres dont au moins une barre comporte des déplacements de bride d'obstruction des interstices et au moins une comporte des faibles déplacements de bride pour assurer un bon aspect esthétique du revêtement.

Selon encore une autre caractéristique de l'invention, le revêtement est caractérisé en ce qu'au moins une barre près de la surface de la pièce en matière plastique comporte des déplacements de bride d'obstruction des interstices et au moins une barre près de l'extérieur assure l'aspect esthétique.

Selon encore une autre caractéristique de l'invention, le revêtement est caractérisé en ce qu'au moins une barre près de l'extérieur comporte des déplacements de bride d'obstruction et au moins une couche près de la surface de la pièce en matière plastique assure l'aspect esthétique en présentant un relief.

Selon encore une autre caractéristique de l'invention, le revêtement est caractérisé en ce que les moyens de barrière résident dans le choix de la matière des fils.

Selon encore une autre caractéristique de l'invention, le revêtement est caractérisé en ce que les fils sont des fils synthétiques multi-filaments notamment en polyester, polyamide ou polypropylène, avantageusement de titre compris entre 20 et 200 décitex.

Selon encore une autre caractéristique de l'invention, le revêtement est caractérisé en ce que les fils multi-filaments comporte des filaments de matières différentes.

Selon encore une autre caractéristique de l'invention, le revêtement est caractérisé en ce que les filaments sont fins pour augmenter la surface du fil.

Selon encore une autre caractéristique de l'invention, le revêtement est caractérisé en ce que les moyens de barrage résident dans l'emploi des métiers de jauge égal ou supérieur à 28 aiguilles par pouce.

L'invention sera mieux comprise, et d'autres buts, caractéristiques, détails et avantages de celle-ci apparaîtront plus clairement dans la description explicative qui va suivre faite en référence aux dessins schématiques annexés donnés uniquement à titre d'exemple illustrant plusieurs modes de réalisation de l'invention et dans lesquels :
La figure 1 est une vue schématique d'un revêtement en textile d'une pièce plastique, selon l'état de la technique ;
la figure 2 est une vue schématique d'un revêtement en textile d'une pièce plastique, selon l'invention ;
les figures 3 et 4 sont des vues schématiques de deux exemples d'armature avec déplacement, d'un textile selon l'invention ;
la figure 5 est une vue de dessous, schématique d'un tricot de revêtement selon l'invention, et
la figure 6 est une vue en coupe, schématique, selon la ligne VI-VI de la figure 5.

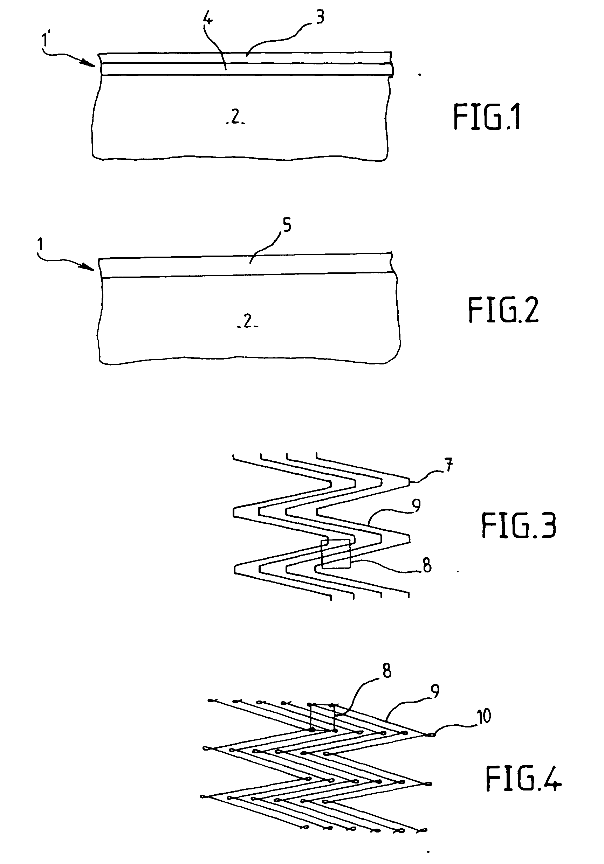

Pour faciliter la compréhension de l'invention, la figure 1 représente, à titre de comparaison, un revêtement noté 1' qui recouvre une pièce en matière plastique 2, par exemple utilisable dans un véhicule automobile, pour donner un aspect noble à la pièce. Il est connu que ces revêtements sont appliqués à leur pièce de support, en les plaçant dans un moule lors de la réalisation de ces pièces par injection de la matière plastique, de façon qu'ils soient plaqués contre une paroi du moule, à l'endroit approprié.

Le revêtement 1' selon l'état de la technique comprend une couche extérieure 3 de textile ou plus particulièrement de tricot, qui est destinée à assurer la fonction décor et une couche 4 d'un non-tissé, collée sous la couche de tricot 3, et qui est destinée à empêcher que la matière plastique lors du moulage de la pièce puisse passer au travers du textile et altérer le décor. Le non-tissé assure donc la fonction barrière rendant le revêtement imperméable à la matière plastique.

La figure 2 illustre un revêtement noté 1 qui est conçu pour accomplir les mêmes fonctions que le revêtement 1' de l'état de la technique, représenté sur la figure 1. Le revêtement selon l'invention ne comporte qu'un textile, plus particulièrement un tricot désigné par la référence 5 qui est appliqué directement à la surface extérieure de la pièce de support 2. On constate que ce revêtement de textile 5, selon l'invention présente la particularité qu'il réunit les deux fonctions de décor et de barrière, ce qui évite l'utilisation d'un non-tissé tel que le non-tissé 4 de la figure 1 et une opération de collage de celui-ci sous une couche de textile, tel que la couche 3. Le textile 5 selon l'invention, répond bien entendu, en plus, aux exigences du secteur automobile spécifiques à la pièce à revêtir, telles que la résistance à la lumière, au frottement etc.

Concernant le revêtement selon l'état de la technique, le non-tissé 4 sous la couche de tricot extérieure 3 est indispensable, parce que le tricot étant composé de mailles, les interstices entre les mailles permettent la traversée de la matière plastique lors de la réalisation par moulage de la pièce 2.

La particularité de l'invention réside dans le fait que le textile ou tricot 5 selon l'invention est rendu imperméable à la matière plastique grâce à des moyens qui sont inhérents au textile. Ces moyens spécifiques de l'invention ont pour fonction d'au moins réduire et même obturer ou remplir ces interstices inter-mailles.

La réduction de ces interstices ou espaces inter-mailles peut être réalisée en employant des métiers de jauges supérieur ou égaux à 28, c'est-à-dire 28 aiguilles par pouce. Plus la jauge est fine, plus les mailles sont rapprochées et les boucles qui constituent les mailles sont fermées.

L'obturation des interstices est obtenue en utilisant des armures ou liages avec des déplacements importants de manière à ce que beaucoup de brides se retrouvent dans chaque espace inter-mailles, comme le montre schématiquement les figures 3 et 4, d'une façon très générale. La figure 3 illustre un tricot sans mailles aux endroits 7, mais comportant des interstices dont l'une est indiquée en 8, traversée par trois déplacements de bride de trame chacun noté 9. La figure montre que la présence de ces trois déplacements réduit considérablement ou même remplit l'interstice 8.

L'exemple de la figure 4 présente un tricot appelé satin de 4. Le tricot comporte à l'endroit 7 de la figure 3 des mailles 10 et se distingue en outre de cette dernière par un déplacement plus important des brides 9, ce qui a pour conséquence qu'un interstice 8 soit traversé par un plus grand nombre de brides 9 qui "remplissent" pratiquement les interstices.

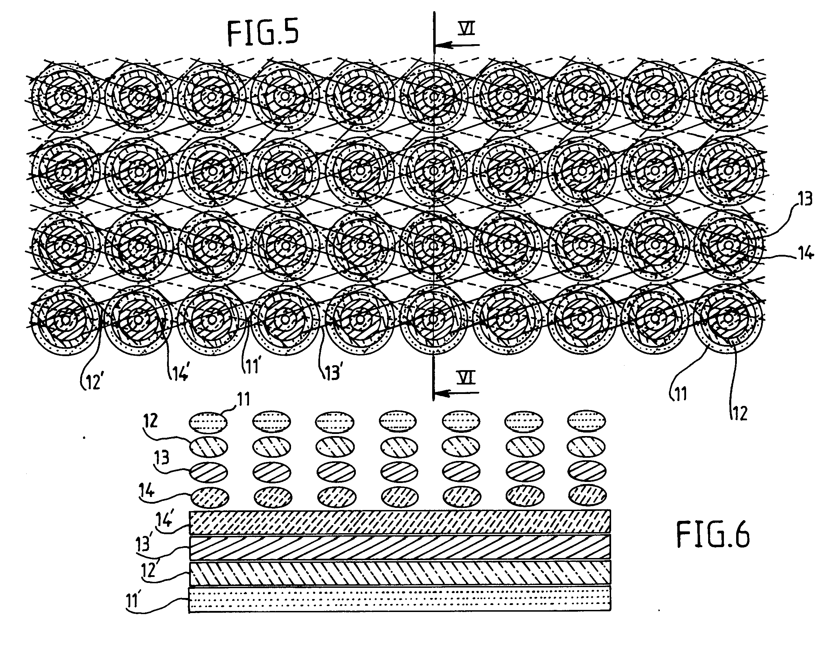

Les figures 5 et 6, bien que schématiques, illustrent plus en détail un tricot tel que représenté dans son principe sur la figure 4. Le tricot comporte quatre barres dont les mailles sont indiquées par les références 11 à 14 et les brides par les références 11' à 14'. La vue de dessus de la figure 5 montre que les déplacements des brides 14' et 13' des barres inférieures 14, 13, sont plus importantes que les déplacements des brides des barres supérieures 11, 12.

En réalisant, dans les couches inférieures des déplacements plus importants, ce qui densifie les brides dans les interstices, la partie inférieure du tricot est en mesure d'accomplir la fonction de barrière tandis que, grâce au déplacement moins important des brides dans les barres supérieures, c'est-à-dire extérieures, la fonction décor est privilégiée.

Une troisième possibilité de réalisation de l'invention réside dans le choix des matières, c'est-à-dire des fils, qui peuvent être des fils synthétiques multi-filaments, tels que des filaments continus, en polyester, polyamide ou polypropylène ou analogue, de titre compris entre 20 et 200 décitex. Plus le titre des filaments est fin, pour un fil de même grosseur, plus il comporte de filaments. Sa surface spécifique en est accrue et l'effet barrière également.

Une quatrième possibilité de réalisation de l'invention réside dans un traitement mécanique, par exemple par grattage ou émérisage, des brides ou des mailles afin d'uniformiser la barrière mise en place et de "colmater" les espaces ou interstices inter-mailles et de générer un volume avec une épaisseur permettant d'éloigner la face envers en contact avec la pièce de la face extérieure d'aspect.

Bien entendu des multiples modifications peuvent être apportées aux modes de réalisation de l'invention, qui précèdent. Par exemple la fonction de barrière pourrait aussi être assurée par les barres extérieures et la fonction de décors par les barres inférieures. Dans ce cas il est souhaitable que les barres de décor aient un relief que l'on peut obtenir en réduisant le nombre de fils par rapport au nombre d'aiguilles, de façon connue. Par exemple, on pourrait utiliser seulement 50 fils pour 100 aiguilles. Grâce au relief des barres ou couches inférieures, visibles de l'extérieur, la fonction de décor du revêtement est toujours assurée.

## Revendications

1. Revêtement textile, susceptible d'être appliqué à la surface extérieure d'une pièce en matière plastique lors de la réalisation par moulage de cette pièce, notamment dans le domaine des véhicules automobiles, ce revêtement comprenant des moyens de barrière le rendant imperméable à la matière plastique lors du moulage, **caractérisé en ce qu'**il est formé par une couche d'un textile appliquée à la surface extérieure de la pièce en matière plastique et **en ce que** les moyens de barrière sont formés par des éléments intrinsèques au textile (5).

2. Revêtement selon la revendication 1, **caractérisé en ce que** les moyens de barrière sont formés par des brides (9) du textile couvrant les interstices (8) du textile (5).

3. Revêtement selon l'une des revendications 1 ou 2, **caractérisé en ce que** le nombre de brides (9) couvrant un interstice (8) est augmenté par augmentation du déplacement de ces brides (9).

4. Revêtement selon l'une des revendications 2 à 3, **caractérisé en ce que** les brides (9) ou les mailles sont traitées mécaniquement par des moyens tels que du grattage ou émérisage.

5. Revêtement selon l'une des revendications 1 à 4, **caractérisé en ce que** le textile (5) comporte une pluralité de barres (11 à 14), dont au moins une barre (14) comporte des déplacements (9) de bride d'obstruction des interstices (8) et au moins une comporte des faibles déplacements de bride (9) pour assurer un bon aspect esthétique du revêtement.

6. Revêtement selon la revendication 5, **caractérisé en ce qu'**au moins une barre (14) près de la surface de la pièce (2) en matière plastique comporte des déplacements (9) de bride d'obstruction des interstices (8) et au moins une barre (11) près de l'extérieur assure l'aspect esthétique.

7. Revêtement selon la revendication 5, **caractérisé en ce qu'**au moins une barre près de l'extérieur comporte des déplacements de bride d'obstruction et au moins une barre près de la surface de la pièce en matière plastique assure l'aspect esthétique en présentant un relief.

8. Revêtement selon la revendication 1, **caractérisé en ce que** les moyens de barrière résident dans le choix de la matière des fils.

9. Revêtement selon la revendication 8, **caractérisé en ce que** les fils sont des fils synthétiques multi-filaments notamment en polyester, polyamide ou polypropylène, avantageusement de titre compris entre 20 et 200 décitex.

10. Revêtement selon la revendication 9,
**caractérisé en ce que** les fils multi-filaments comporte des filaments de matières différentes.

11. Revêtement selon l'une des revendications 8 ou 9, **caractérisé en ce que** les filaments sont fins pour augmenter la surface du fil.

12. Revêtement selon l'une des revendications 2 à 10, **caractérisé en ce que** les moyens de barrage résident dans l'emploi des métiers de jauge égal ou supérieur à 28 aiguilles par pouce.
